(19) Europäisches Patentamt
European Patent Office
Office européen des brevets

(11) EP 1 018 536 A1

(12) EUROPEAN PATENT APPLICATION
published in accordance with Art. 158(3) EPC

(43) Date of publication:
**12.07.2000 Bulletin 2000/28**

(21) Application number: **98921764.1**

(22) Date of filing: **22.05.1998**

(51) Int. Cl.$^7$: **C09K 11/06**

(86) International application number:
**PCT/JP98/02251**

(87) International publication number:
**WO 98/53024 (26.11.1998 Gazette 1998/47)**

(84) Designated Contracting States:
**DE FR GB**

(30) Priority: **23.05.1997 JP 13339897**

(71) Applicant:
**KUREHA KAGAKU KOGYO KABUSHIKI KAISHA
Chuo-ku, Tokyo 103-8552 (JP)**

(72) Inventors:
- **KOIZUMI, Tomoyoshi
Nishiki Plant
Iwaki-shi Fukushima 974-8686 (JP)**
- **KATONO, Hiroki
Nishiki Plant
Iwaki-shi Fukushima 974-8686 (JP)**
- **MACHIDA, Katsuichi
Nishiki Plant
Iwaki-shi Fukushima 974-8686 (JP)**
- **SHOUJI, Masuhiro
Nishiki Plant
Iwaki-shi Fukushima 974-8686 (JP)**
- **OGIHARA, Takeo
Nishiki Plant
Iwaki-shi Fukushima 974-8686 (JP)**

(74) Representative:
**Grünecker, Kinkeldey,
Stockmair & Schwanhäusser
Anwaltssozietät
Maximilianstrasse 58
80538 München (DE)**

# (54) LUMINESCENT PLASTIC MATERIAL AND PROCESS FOR PRODUCING THE SAME

(57) Disclosed herein are plastic luminescent materials which have high light-amplifying ability and are easy to form or mold, and a process capable of producing such a plastic luminescent material with advantage.

The plastic luminescent materials according to the invention comprise a resin containing a phosphate group and a rare earth metal ion therein. The resin is preferably an acrylic resin, and a polymer constituting the resin is particularly preferably a copolymer obtained by copolymerizing a specific phosphate group-containing monomer and a copolymerizable monomer. The luminescent materials according to the invention preferably contain an amide group.

The production process according to the invention comprises the step of subjecting 100 parts by mass of a monomer mixture comprising a specific phosphate group-containing monomer and a specific amide group-containing compound to a polymerization treatment in the presence of 0.005 to 80 parts by mass of a rare earth metal compound.

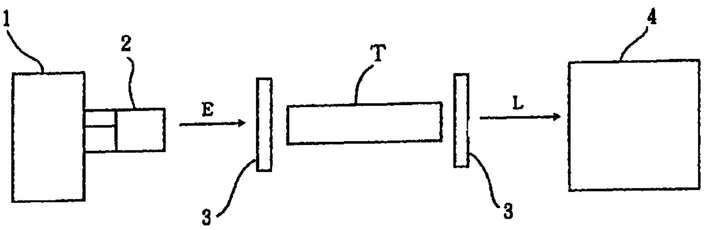


Fig. 1

EP 1 018 536 A1

## Description

TECHNICAL FIELD

The present invention relates to plastic luminescent materials and a production process thereof, and more particularly to plastic luminescent materials making good use of light-emitting characteristics by a rare earth metal ion, and a production process thereof.

BACKGROUND ART

Rare earth metal ions have been known to have light-emitting characteristics of absorbing light having a specific wavelength in an ultraviolet, visible or infrared region, thereby emitting light having a wavelength longer than the wavelength of said light.

For example, it has been known that a trivalent neodymium ion absorbs light having wavelengths in the vicinity of 800 nm and 900 nm, thereby emitting light having wavelengths in the vicinity of 1060 nm and 1320 nm, a trivalent praseodymium ion absorbs light having a wavelength in the vicinity of 1020 nm, thereby emitting light having a wavelength in the vicinity of 1300 nm, a trivalent erbium ion absorbs light having a wavelength in the vicinity of 1480 nm, thereby emitting light having a wavelength in the vicinity of 1540 nm, a trivalent europium ion absorbs light having a wavelength in the vicinity of 400 nm, thereby emitting light having a wavelength in the vicinity of 620 nm, a trivalent samarium ion absorbs light having a wavelength in the vicinity of 400 nm, thereby emitting light having a wavelength in the vicinity of 600 nm, a trivalent gadolinium ion absorbs light having a wavelength in the vicinity of 280 nm, thereby emitting light having a wavelength in the vicinity of 310 nm, a trivalent terbium ion absorbs light having a wavelength in the vicinity of 380 nm, thereby emitting light having a wavelength in the vicinity of 540 nm, a trivalent dysprosium ion absorbs light having a wavelength in the vicinity of 350 nm, thereby emitting light having a wavelength in the vicinity of 580 nm, and a trivalent thulium ion absorbs light having a wavelength in the vicinity of 360 nm, thereby emitting light having a wavelength in the vicinity of 450 nm.

The light-emitting characteristics of these rare earth metal ions are of great utility value in light amplifiers for lasers and optical fibers for communication. In particular, a near infrared region corresponds to a transmission band of optical fibers in current use. Therefore, the development of light-amplifying materials containing a rare earth metal having light-emitting characteristics in the near infrared region, and of glass fiber light amplifiers using of such a light-amplifying material is being advanced.

A glass material such as quartz glass has heretofore been used as a base of the light-amplifying material (luminescent material) containing a rare earth metal ion. In the glass-made luminescent material, however, the rare earth metal ion cannot be contained in a state uniformly dispersed in a high proportion in the glass. Therefore, its light-amplifying ability per unit length is not sufficiently high. It is thus necessary to form such a luminescent material into, for example, a fiber as very long as about 10 m in order to achieve the intended light-amplifying ability. In addition, since the glass-made luminescent material is poor in forming or molding ability, it involves a problem that it is difficult to mold it into the desired shape.

DISCLOSURE OF THE INVENTION

[Problems to be solved by the Invention]

The present invention has been made in view of the foregoing circumstances, and it is an object of the present invention to provide a plastic luminescent material which has high light-amplifying ability and is easy to form or mold.

Another object of the present invention is to provide a plastic luminescent material containing a rare earth metal ion in a state uniformly dispersed in a high proportion in a resin.

A further object of the present invention is to provide a plastic luminescent material which has high light-amplifying ability and is easy to form or mold and low in water absorption property.

A still further object of the present invention is to provide a process capable of producing the above plastic luminescent materials with advantage.

[Means for solving the Problems]

A plastic luminescent material according to the present invention comprises a resin containing a phosphate group and a rare earth metal ion therein.

The preferred embodiments in the plastic luminescent material according to the present invention are as follows:

(i) the phosphate group exists in the form chemically bonded to the structure of a polymer constituting the resin;
(ii) the resin is an acrylic resin;
(iii) the polymer constituting the resin is a copolymer obtained by copolymerizing a phosphate group-containing monomer represented by the following formula (1) and a monomer copolymerizable therewith:

$$PO(OH)_nR_{3-n} \qquad \text{Formula (1)}$$

wherein R means a polymerizable functional group represented by the following formula (2), and n is 1 or 2:

$$CH_2{=}CXCOO(C_pH_{2p}O)_m- \qquad \text{Formula (2)}$$

wherein X denotes a hydrogen atom or a methyl group, p is an integer of 2 to 6, and m is an integer of 0 to 5;
(iv) the rare earth metal ion is at least one selected from the group consisting of a trivalent neodymium ion, a trivalent praseodymium ion, a trivalent erbium ion and a trivalent europium ion;
(v) an amide group is contained;
(vi) the amide group is contained by dispersing at least one compound selected from the group consisting of an amide group-containing compound represented by the following formula (3), an amide group-containing compound represented by the following formula(4) and an amide group-containing compound represented by the following formula (5) in the resin:

Formula (3) 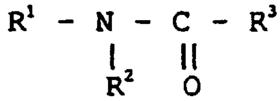

wherein $R^1$ and $R^2$ independently mean a hydrogen atom, an alkyl group having 1 to 4 carbon atoms or a phenyl group and may be the same or different from each other, and $R^3$ denotes a hydrogen atom, an alkyl group having 1 to 4 carbon atoms or an alkenyl group having 2 or 3 carbon atoms;

Formula (4) 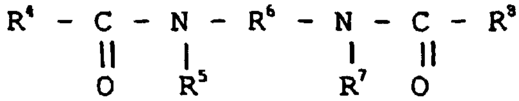

wherein $R^4$ and $R^8$ independently mean a hydrogen atom, an alkyl group having 1 to 4 carbon atoms or an alkenyl group having 2 or 3 carbon atoms and may be the same or different from each other, $R^5$ and $R^7$ independently denote a hydrogen atom, an alkyl group having 1 to 4 carbon atoms or a phenyl group and may be the same or different from each other, and $R^6$ represents an alkylene group having 1 to 6 carbon atoms; and

Formula (5)

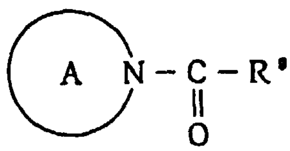

wherein a ring A means a 4-, 5- or 6-membered ring or a heterocycle thereof, and $R^9$ denotes a hydrogen atom, an alkyl group having 1 to 4 carbon atoms or an alkenyl group having 2 or 3 carbon atoms;
(vii) the amide group exists in the form chemically bonded to the structure of the polymer constituting the resin;
(viii) the polymer constituting the resin is a copolymer obtained by copolymerizing a monomer mixture containing the phosphate group-containing monomer and a polymerizable amide group-containing compound; and
(ix) the total content of the amide group and the phosphate group in the resin is 0.01 to 50 mass%, a proportion of the amide group to the phosphate group is 10:90 to 70:30 in terms of a mass ratio, and the content of the rare earth metal ion is 0.005 to 30 parts by mass per 100 parts by mass of the resin.

A prastic optical material according to the present invention comprises a resin containing a phoshate group and a rare earth metal ion therein.

A process for producing a plastic luminescent material according to the present invention comprises the step of subjecting 100 parts by mass of the following monomer mixture (I) to a polymerization treatment in the presence of 0.005 to 80 parts by mass of a rare earth metal compound:

[Monomer mixture (I)]

A monomer mixture comprising:

a phosphate group-containing monomer represented by the formula (1), and
at least one compound selected from the group consisting of an amide group-containing compound represented by the formula (3), an amide group-containing compound represented by the formula (4) and an amide group-containing compound represented by the formula (5),
wherein the total content of the phosphate group in the phosphate group-containing monomer and the amide group in the amide group-containing compound is 0.01 to 50 mass% based on the whole polymerizable component, and a proportion of the amide group to the phosphate group is 10:90 to 70:30 in terms of a mass ratio.

The preferred embodiments in the production process according to the present invention are as follows:

(i) a polymerizable amide group-containing compound, in which $R^3$ in the formula (3) is an alkenyl group having 2 or 3 carbon atoms, is used;
(ii) a polymerizable amide group-containing compound, in which $R^4$ or $R^8$ in the formula (4) is an alkenyl group having 2 or 3 carbon atoms, is used; and
(iii) a polymerizable amide group-containing compound, in which $R^9$ in the formula (5) is an alkenyl group having 2 or 3 carbon atoms, is used.

[Mode for Carrying out the Invention]

The present invention will hereinafter be described in detail.

The plastic luminescent materials according to the present invention comprise a resin containing a rare earth metal ion and a phosphate group therein.

In the present invention, the resin constituting the luminescent materials according to the present invention is preferably an acrylic resin. In addition, the luminescent materials according to the present invention preferably contain an amide group.

In the present invention, the term "phosphate group" means a group represented by a formula $PO(OH)_n$- (n being 1 or 2), while the term "amide group" means a group represented by the following formula (6): Formula (6)

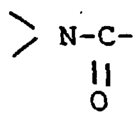

In the plastic luminescent materials according to the present invention, specific examples of the rare earth metal ion contained in the resin include metal ions of lanthanoids, i.e., lanthanum, cerium, praseodymium, neodymium, promethium, samarium, europium, gadolinium, terbium, dysprosium, holmium, erbium, thulium, ytterbium and lutetium.

Of these, neodymium, praseodymium or erbium is preferably used in that it emits light within the lowest loss wavelength band of a quartz glass-made optical fiber, specifically, a wavelength band of 800 to 1700 nm.

These rare earth metal ions are contained in the resin by using specific metal compounds containing their corresponding metal ions as sources of supply. Examples of such specific metal compounds include anhydrides and hydrates of metal salts composed of any of the above-mentioned rare earth metals and an organic acid such as acetic acid, benzoic acid or oxalic acid, or an inorganic acid such as sulfuric acid, hydrochloric acid, nitric acid or hydrofluoric acid, and oxides of the rare earth metals. However, the metal compounds are not limited to these compounds.

Other metal ions than the rare earth metal ion may be contained in the resin within limits not impeding the objects of the present invention, for example, in a proportion of 30 mass% of the whole metal ion component or lower.

As such other metal ions, there may be used ions of sodium, potassium, calcium, iron, manganese, cobalt, magnesium, nickel, aluminum, phosphorus and the like. These metal ions can be contained in the resin by using metal compounds containing their corresponding metal ions as sources of supply like the rare earth metal ions.

The content of the rare earth metal ion is preferably 0.005 to 30 parts by mass, particularly 0.01 to 20 parts by mass per 100 parts by mass of the resin. If the proportion of the rare earth metal ion is lower than 0.005 parts by mass, any luminescent material, which has sufficiently high light-emitting ability, may not be obtained in some cases. If the proportion exceeds 30 parts by mass on the other hand, it is difficult to uniformly disperse the rare earth metal ion in the resin.

In the plastic luminescent materials according to the present invention, the phosphate group is contained as a component for dispersing the rare earth metal ion in the resin.

The phosphate group may be contained either ① by dispersing a compound containing the phosphate group in the resin or ② in a state chemically bonded to the structure of a polymer constituting the resin.

Since the rare earth metal ion is kept in a stable state by being coordinated with the phosphate group, it is however preferred that the phosphate group be contained in the resin ② in the state chemically bonded to the structure of the polymer constituting the resin in that the dispersibility of the rare earth metal ion can be enhanced to contain the rare earth metal ion in a high proportion.

The proportion (a) of the phosphate group in the resin is preferably 0.003 to 50 mass%, more preferably 0.003 to 45 mass%.

If this proportion is lower than 0.003 mass%, it is difficult to uniformly disperse the rare earth metal ion in the resin even when an amide group, which will be described subsequently, is contained together. Therefore, no luminescent material excellent in clearness can be provided. If this proportion exceeds 50 mass% on the other hand, it is difficult to uniformly disperse the rare earth metal ion in the resin, and the hygroscopicity of the resulting luminescent material becomes high. Such a luminescent material is not preferred from the viewpoint of practical use because molded or formed products from the luminescent material may become expanded or opacified by moisture absorption in some cases.

The term "the proportion (a) of the phosphate group in the resin" as used herein means a mass proportion of the phosphate group based on the total mass of the resin and a phosphate group-containing compound ① where the phosphate group is contained by dispersing the phosphate group-containing compound in the resin, or a mass proportion of the phosphate group contained in the resin (to which the phosphate group is bonded) ② where the phosphate group is contained in a state chemically bonded to the structure of a polymer constituting the resin.

The proportion of the phosphate group contained in the plastic luminescent materials according to the present invention is preferably 0.0015 to 50 mass%.

As the acrylic resin with the phosphate group chemically bonded to the structure of its polymer, there may preferably be used a copolymer resin (hereinafter may also be referred to as "the specific acrylic copolymer resin") obtained by copolymerizing a monomer mixture composed of a monomer (hereinafter referred to as "the specific phosphate group-containing monomer") represented by the formula (1) and a monomer (hereinafter referred to as "the copolymerizable monomer") copolymerizable therewith.

In the formula (1) which represents the molecular structure of the specific phosphate group-containing monomer, the group R is an acryloyloxy group (in the case where X is a hydrogen atom) or a methacryloyloxy group (in the case where X is a methyl group), to which an alkylene oxide group is bonded, as represented by the formula (2).

Here, the number p of carbon atoms in the alkylene oxide group is 2 to 6, preferably 2.

A compound in which the value of p is smaller than 2 has an unstable structure and cannot be used. If the value of p exceeds 6 on the other hand, the resulting luminescent material becomes too soft or flexible and is unsuitable for use as a component for light amplifiers and the like.

The recurring number m of the alkylene oxide group is an integer of 0 to 5. If the value of m exceeds 5, the resulting copolymer will become greatly lowered in hardness and hence lacking in practicability as a luminescent material (light-amplifying material) used in light amplifiers.

The number n of the hydroxyl group in the formula (1) is 1 or 2. The specific phosphate group-containing monomer in which the value of n is 1 and the specific phosphate group-containing monomer in which the value of n is 2 may be used either singly or in combination according to properties required of the resulting luminescent material, and the molding or forming process and intended end application thereof. When both monomers are used, their mixing proportions may be suitably selected.

More specifically, the specific phosphate group-containing monomer in which the value of n is 1 is a monomer in which the number of radical-polymerizable ethylenically unsaturated bonds bonded to the phosphorus atom is 2, and has crosslink-polymerizability. On the other hand, in the specific phosphate group-containing monomer in which the value of n is 2, the number of the ethylenically unsaturated bond is 1, and the number of hydroxyl groups bonded to the phosphorus atom is 2. Such a monomer is high in bonding ability to the rare earth metal ion.

Accordingly, in the case where the luminescent material according to the present invention is processed by

an injection molding process or extrusion process, which is a general molding or forming process for thermoplastic resins, it is preferred to use the specific phosphate group-containing monomer in which the value of n is 2.

On the other hand, when both the specific phosphate group-containing monomer in which the value of n is 1 and the specific phosphate group-containing monomer in which the value of n is 2 are used, it is preferred to use a cast polymerization process by which the intended shape can be directly obtained upon the preparation of the specific acrylic copolymer resin.

As described above, any one of the specific phosphate group-containing monomer in which the value of n is 1 and the specific phosphate group-containing monomer in which the value of n is 2 may be selected according to properties required of the resulting luminescent material, and the molding or forming process and intended end application thereof. However, it is preferred to use both monomers together. In particular, the combined use of the specific phosphate group-containing monomer in which the value of n is 1 and the specific phosphate group-containing monomer in which the value of n is 2 in proportions that they are contained in substantially equimolar amounts to each other, for example, in proportions that their molar ratio amounts to 45:55 to 55:45, is preferred because the solubility of the rare earth metal compound, which is a supply source of the rare earth metal ion, in the monomer mixture becomes high.

In order to obtain the specific acrylic copolymer resin, a monomer mixture composed of the specific phosphate group-containing monomer and the copolymerizable monomer is used. The use of such a monomer mixture permits the adjustment of performance characteristics of the resulting luminescent material, such as hygroscopicity, refractive index and hardness.

No particular limitation is imposed on the copolymerizable monomer so far as it satisfies, for example, the following requirements:

(1) it is uniformly mixed with the specific phosphate group-containing monomer used into a solution;
(2) it has good radical copolymerizability with the specific phosphate group-containing monomer used; and
(3) it can provide an optically transparent copolymer.

Specific examples of such a copolymerizable monomer include:

monofunctional (meth)acrylates (the term "(meth)acrylate" as used herein means each of "acrylate" and "methacrylate"] such as:
lower alkyl (meth)acrylates the alkyl group of which has 1 to 12 carbon atoms, such as methyl (meth)acrylate, ethyl (meth)acrylate, n-propyl (meth)acrylate, n-butyl (meth)acrylate, isobutyl (meth)acrylate, n-hexyl (meth)acrylate, n-octyl (meth)acrylate and 2-ethylhexyl (meth)acrylate; and
modified alkyl (meth)acrylates such as glycidyl (meth)acrylate, 2-hydroxyethyl (meth)acrylate, 2-hydroxypropyl (meth)acrylate and 2-hydroxybutyl (meth)acrylate;
polyfunctional (meth)acrylates such as ethylene glycol di(meth)acrylate, diethylene glycol di(meth)acrylate, polyethylene glycol di(meth)acrylate, 1,3-butylene glycol di(meth)acrylate, 1,4-butanediol di(meth)acrylate, 1,6-hexanediol di(meth)acrylate, neopentylglycol di(meth)acrylate, 2-hydroxy-1,3-di-methacryloxypropane, 2,2-bis[4-methacryloxyethoxyphenyl]-propane, 2-hydroxy-1-acryloxy-3-methacryloxypropane, trimethylolpropane tri(meth)acrylate, pentaerythritol tri(meth)acrylate and pentaerythritol tetra(meth)acrylate; and
carboxylic acids having a radical-polymerizable unsaturated bond, such as acrylic acid, methacrylic acid, 2-methacryloyloxyethylsuccinic acid and 2-methacryloyl-oxyethylphthalic acid.

Aromatic vinyl compounds such as styrene, $\alpha$-methyl-styrene, chlorostyrene, dibromostyrene, methoxystyrene, divinylstyrene, vinylbenzoic acid, hydroxymethylstyrene and trivinylbenzene may also be used.

These compounds may be used either singly or in any combination thereof.

A proportion of the specific phosphate group-containing monomer to the copolymerizable monomer to be used is preferably within a range of from 3:97 to 80:20, particularly from 5:95 to 75:25 in terms of a mass ratio.

Since the specific phosphate group-containing monomer is a monomer high in radical polymerizability, almost all the monomers in the monomer mixture can be considered to be converted into a copolymer by subjecting the monomer mixture to a polymerization treatment. Therefore, when the specific phosphate group-containing monomer and the copolymerizable monomer are used in the above-described proportions, an acrylic resin (the specific acrylic copolymer resin) with the phosphate group bonded to the structure of the polymer in the above-described specific proportion is obtained.

In the plastic luminescent materials according to the present invention, it is preferred that an amide group be contained as another component for enhancing the dispersibility of the rare earth metal ion together with the phosphate group.

When the amide group is contained together with the phosphate group, the dispersibility of the rare earth metal ion can be more enhanced compared with the single use of the phosphate group. Although the reason for it is not

fully elucidated, it is considered to be attributable to, for example, the fact that the formation of a coordinate bond of the phosphate group with the rare earth metal ion is facilitated, that the rare earth metal ion is coordinated with the amide group to form a complex, and that the compatibility of the complex with the acrylic resin is enhanced.

The amide group may be contained either ① by dispersing a compound containing the amide group in the resin or ② in a state chemically bonded to the structure of a polymer constituting the resin.

It is however preferred that the amide group be contained in the resin ② in the state chemically bonded to the structure of the polymer constituting the resin in that the dispersibility of the rare earth metal ion can be enhanced to contain the rare earth metal ion in a high proportion, and that deterioration with time caused by the isolation of the rare earth metal ion from the resin can be lessened to provide a luminescent material having high durability.

As the compound containing the amide group, there may preferably be used an amide group-containing compound (hereinafter may also be referred to as "the specific amide group-containing compound") represented by the formula (3), (4) or (5).

Specific examples of the amide group-containing compound represented by the formula (3) include:

polymerizable amide group-containing compounds in which $R^3$ in the formula (3) is an alkenyl group having 2 or 3 carbon atoms, such as (meth)acrylamide [the term "(meth)acrylamide" as used herein means each of "acrylamide" and "methacrylamide"],

N-alkyl-substituted (meth)acrylamides such as N-methyl(meth)acrylamide, N-ethyl(meth)acrylamide, N-isopropyl(meth)acrylamide, N-n-propyl(meth)acrylamide, N-t-butyl(meth)acrylamide, N-sec-butyl(meth)acrylamide and N-n-butyl(meth)acrylamide, and

N,N-dialkyl-substituted (meth)acrylamides such as N,N-dimethyl(meth)acrylamide, N,N-diethyl(meth)acrylamide, N,N-diisopropyl(meth)acrylamide, N,N-di-n-propyl(meth)-acrylamide, N-methyl-N-ethyl(meth)acrylamide, N-methyl-N-isopropyl(meth)acrylamide, N-methyl-N-n-propyl(meth)-acrylamide, N-ethyl-N-isopropyl(meth)acrylamide and N-ethyl-N-n-propyl(meth)acrylamide; and

non-polymerizable amide group-containing compounds in which $R^3$ in the formula (3) is a hydrogen atom or an alkyl group having 1 to 4 carbon atoms, such as formamide and acetamide,

N-alkyl-substituted formamides such as N-methyl-formamide, N-ethylformamide, N-isopropylformamide and N-t-butylformamide,

N-alkyl-substituted acetamides such as N-methyl-acetamide, N-ethylacetamide, N-isopropylacetamide and N-t-butylacetamide,

N,N-alkyl-substituted formamides such as N,N-dimethylformamide, N,N-diethylformamide, N,N-diisopropyl-formamide and N,N-di-t-butylformamide, and

N,N-alkyl-substituted acetamides such as N,N-dimethylacetamide, N,N-diethylacetamide, N,N-diisopropylacetamide and N,N-di-t-butylacetamide.

Specific examples of the amide group-containing compound represented by the formula (4) include:

polymerizable amide group-containing compounds in which $R^4$ or $R^8$ in the formula (4) is an alkenyl group having 2 or 3 carbon atoms, such as N,N'-methylenebis-(meth)acrylamide, N,N'-ethylenebis(meth)acrylamide, N,N'-propylenebis(meth)acrylamide and N,N'-butylenebis-(meth)acrylamide; and

non-polymerizable amide group-containing compounds in which $R^4$ or $R^8$ in the formula (4) is a hydrogen atom or an alkyl group having 1 to 4 carbon atoms, such as N,N'-ethylenebisformamide, N,N'-propylenebisformamide, N,N'-butylenebisformamide, N,N'-ethylenebisacetamide, N,N'-propylenebisacetamide and N,N'-butylenebisacetamide.

Specific examples of the amide group-containing compound represented by the formula (5) include:

polymerizable amide group-containing compounds in which $R^9$ in the formula (5) is an alkenyl group having 2 or 3 carbon atoms, such as N-(meth)acryloylpyrrolidine [the term "(meth)acryloyl" as used herein means each of "acryloyl" and "methacryloyl"], N-(meth)acryloylpiperidine, N-(meth)- acryloylpiperazine, (meth)acryloylmorpholine and (meth)acryloylpiperidone; and

non-polymerizable amide group-containing compounds in which $R^9$ in the formula (5) is a hydrogen atom or an alkyl group having 1 to 4 carbon atoms, such as 4-acetyl-morpholine, 1-acetylpiperazine, 1-acetylpiperidine and 1-acetylpiperidone.

These specific amide group-containing compounds may be used either singly or in any combination thereof.

In the present invention, the specific amide group-containing compound is uniformly dispersed in the resin, whereby the amide group of the specific amide group-containing compound can be contained in the resin. Among these specific amide group-containing compounds, the polymerizable amide group-containing compounds in which $R^3$ in the

formula (3),$R^4$ or $R^8$ in the formula (4), or $R^9$ in the formula (5) is an alkenyl group having 2 or 3 carbon atoms are copolymerizable with the specific phosphate group-containing compounds. Therefore, such a specific polymerizable amide group-containing compound can be used as the whole or a part of the copolymerizable monomer for obtaining the specific acrylic copolymer resin, whereby an acrylic resin with both phosphate group and amide group chemically bonded to the structure of the polymer can be obtained.

The proportion of the specific amide group-containing compound to be used is preferably 1 to 60 mass% based on the plastic luminescent material according to the present invention or the whole raw material used for obtaining the plastic luminescent material.

If the proportion of the specific amide group-containing compound to be used is lower than 1 mass%, it is impossible to disperse the rare earth metal ion in a high proportion. Therefore, any luminescent material having high light-amplifying ability and low water absorption property may not be obtained in some cases. If the proportion of the specific amide group-containing compound to be used exceeds 60 mass% on the other hand, it is difficult to uniformly disperse the specific amide group-containing compound itself in the luminescent material or the raw materials therefor, and the resulting luminescent material tends to become high in hygroscopicity, which is not preferable from the viewpoint of practical use because molded or formed products from the luminescent material may become expanded or opacified by moisture absorption in some cases.

The proportion (b) of the amide group in the resin is preferably 0.001 to 35 mass%.

If this proportion is lower than 0.001 mass%, it is impossible to sufficiently exhibit the effect of enhancing the dispersibility of the rare earth metal ion. If this proportion exceeds 35 mass% on the other hand, the hygroscopicity of the resulting luminescent material becomes high, and the luminescent material tends to discolor. It is hence not preferred to contain the amide group in such a high proportion.

The term "the proportion (b) of the amide group in the resin" as used herein means a mass proportion of the amide group based on the total mass of the resin and an amide group-containing compound ① where the amide group is contained by dispersing the amide group-containing compound in the resin, or a mass proportion of the amide group contained in the resin (to which the amide group is bonded) ② where the amide group is contained in a state chemically bonded to the structure of a polymer constituting the resin.

The proportion of the amide group contained in the plastic luminescent material according to the present invention is preferably 0.0005 to 35 mass%.

In the plastic luminescent materials according to the present invention, the total proportion [(a) + (b)] of the amide group and the phosphate group contained in the resin is preferably 0.01 to 50 mass%.

If the total content of the amide group and the phosphate group is too low, it may be difficult in some cases to sufficiently disperse the rare earth metal ion. If the total content of the amide group and the phosphate group is too high on the other hand, the dispersibility of the rare earth metal ion may be lowered in some cases, and the resulting luminescent material tends to become high in hygroscopicity, which is not preferable from the viewpoint of practical use because molded or formed products from the luminescent material may become expanded or opacified by moisture absorption in some cases.

A proportion of the amide group to the phosphate group is preferably 10:90 to 70:30, particularly 15:85 to 60:40 in terms of a mass ratio of the amide group to the phosphate group.

If the proportion of the amide group is too low, it may be impossible in some cases to satisfactorily achieve the effect brought about by containing the amide group, i.e., the effect of enhancing the dispersibility of the rare earth metal ion. On the other hand, a proportion of the amide group too high is not preferable because its effect is not brought about correspondingly to the proportion of the amide group, since the content of the phosphate group becomes relatively low.

The plastic luminescent materials according to the present invention can be produced with advantage by subjecting the monomer mixture containing at least the specific phosphate group-containing monomer and the specific amide group-containing compound to a polymerization treatment by a radical polymerization process in the presence of the rare earth metal compound which is a supply source of the rare earth metal ion.

Specifically, the rare earth metal compound is added to the monomer mixture before the radical polymerization of the polymerizable component in the monomer mixture is conducted, thereby dissolving or dispersing the rare earth metal compound in the monomer mixture to prepare a monomer composition containing the specific phosphate group-containing monomer, the specific amide group-containing compound and the rare earth metal compound. This monomer composition is then subjected to the radical polymerization treatment.

In the monomer mixture, the total content of the phosphate group in the specific phosphate group-containing monomer and the amide group in the specific amide group-containing compound is 0.01 to 50 mass% based on the polymerizable component, and the proportion of the amide group to the phosphate group is 10:90 to 70:30 in terms of a mass ratio. In order to prepare such a monomer mixture, the above-described copolymerizable monomers may be used as needed.

The proportion of the rare earth metal compound to be used is 0.005 to 80 parts by mass, preferably 0.01

to 70 parts by mass per 100 parts by mass of the monomer mixture.

The rare earth metal compound can be surely dissolved or dispersed in the monomer mixture by satisfying such conditions, and so a luminescent material containing the phosphate group, amide group and rare earth metal ion in the above-described respective proportions can be obtained.

In the preparation of the monomer mixture, the use of a polymerizable compound as the specific amide group-containing compound permits the provision of the specific acrylic copolymer resin with the amide group chemically bonded to the structure of the polymer, whereby the dispersibility of the rare earth metal ion can be more enhanced.

In the polymerization treatment of the monomer mixture, no particular limitation is imposed on the radical polymerization process. Any known process making use of a usual radical polymerization initiator, such as bulk (cast) polymerization, suspension polymerization, emulsion polymerization or solution polymerization process, may be used.

The plastic luminescent materials according to the present invention can be produced with advantage by the above-described process. However, the process for producing the plastic luminescent materials according to the present invention is not limited to this process. The luminescent materials may also be produced by, for example, the following processes.

(1) A process comprising adding the rare earth metal compound, which is a supply source of the rare earth metal ion, to the specific acrylic copolymer resin obtained by subjecting the monomer mixture to the radical polymerization treatment to mix them.

In the process (1), specifically, there may be used a) a process in which the specific acrylic copolymer resin is heated and melted, and the rare earth metal compound is added to the melt to mix them, b) a process in which the specific acrylic copolymer resin is dissolved in an organic solvent or the like, and the rare earth metal compound is added to this solution to mix them, or the like.

(2) A process comprising radical-polymerizing a monomer mixture composed of the specific phosphate group-containing monomer and the copolymerizable monomer to prepare a specific acrylic copolymer resin and adding the specific amide group-containing compound and the rare earth metal compound, which is a supply source of the rare earth metal ion, to this specific acrylic copolymer resin to mix them.

In the process (2), the processes according to the process (1) may be utilized.

The thus-obtained plastic luminescent material may be used in various applications fields either as it is or by suitably molding or forming it in the form of a plate, prism (for example, a rod having a rectangular section), column, lens, fiber or the like as necessary for the end application intended and polishing the molded or formed product as needed.

As the result that a rare earth metal ion is supplied from the rare earth metal compound, and the rare earth metal ion is bonded to the phosphate group or amide group, an acid derived from the rare earth metal compound is contained as a by-product in the acrylic resin. It is more preferable to remove this acid by a proper process, for example, separation of crystals by filtration, evaporation at a high temperature, solvent extraction, water washing, or the like.

## BRIEF DESCRIPTION OF THE DRAWINGS

FIGs. 1 and 2 schematically illustrate apparatus used for determining the light-emitting characteristics of luminescent materials obtained in the following examples.

## BEST MODE FOR CARRYING OUT THE INVENTION

The present invention will hereinafter be described with reference to the following examples. However, the present invention is not limited to and by these examples. Incidentally, all designations of "part" or "parts" as will be used in the following examples mean part or parts by mass.

〈Example 1〉

A specific phosphate group-containing monomer (hereinafter referred to as "Monomer (M1)") represented by the following formula (7) in an amount of 35.65 parts and a specific phosphate group-containing monomer (hereinafter referred to as "Monomer (M2)") represented by the following formula (8) in an amount of 21.39 parts were thoroughly mixed with 42.96 parts of methyl methacrylate (hereinafter referred to as "MMA"), thereby preparing a monomer mixture.

To this monomer mixture were added 13.33 parts of neodymium acetate monohydrate (containing a trivalent neodymium ion in a proportion of 5.67 parts per 100 parts of the polymerizable component), and the resultant mixture was thoroughly stirred and mixed, thereby preparing a monomer composition.

$$(CH_2{=}CCH_3COOC_2H_4O)_2PO(OH);\qquad \text{Formula (7)}$$

and

$$CH_2{=}CCH_3COOC_2H_4OPO(OH)_2\qquad \text{Formula (8)}$$

To the thus-prepared monomer composition were added 2.0 parts of t-butyl peroxyneodecanoate. The resultant mixture was heated at 35°C for 1 hour, from 35°C to 60°C over 6 hours, from 60°C to 80°C over 2 hours and then from 80°C to 100°C over 1 hour. The mixture was held at 100°C for 2 hours to conduct cast polymerization, thereby producing a transparent plastic luminescent material (light-amplifying material) in the form of a rod 1 cm in diameter and 5 cm in length, which was composed of a crosslinked acrylic copolymer containing a trivalent neodymium ion.

With respect to the rod-like luminescent material thus obtained, the light-emitting characteristics were determined by means of such an apparatus as illustrated in FIG. 1. In FIG. 1, reference numeral 1 indicates a controller, 2 a semiconductor laser, 3 a resonator, and 4 a light spectrum analyzer, and reference character T designates a rod-like luminescent material, E excitation light, and L light emission from the luminescent material T.

In this example, "Al-Ga-As Semiconductor Laser" was used as the semiconductor laser (2).

After both end surfaces of the rod-like luminescent material (T) were mirror-polished, and the thus-treated luminescent material (T) was interposed between the resonators (3, 3), excitation light (wavelength: about 800 nm) from the semiconductor laser (2) of 0.5 W was caused to be absorbed in the luminescent material (T) to determine the light-emitting characteristics (wavelength) from the luminescent material (T) by means of the light spectrum analyzer (4). As a result, it was confirmed that the luminescent material emits light having a wavelength in the vicinity of 1060 nm.

〈Example 2〉

Monomer (M1) in an amount of 7.67 parts and Monomer (M2) in an amount of 4.60 parts were thoroughly mixed with 87.73 parts of MMA, thereby preparing a monomer mixture.

To this monomer mixture were added 2.71 parts of neodymium acetate monohydrate (containing a trivalent neodymium ion in a proportion of 1.15 parts per 100 parts of the polymerizable component), and the resultant mixture was thoroughly stirred and mixed, thereby preparing a monomer composition.

To the thus-prepared monomer composition were added 2.0 parts of t-butyl peroxyneodecanoate. The resultant mixture was heated at 35°C for 1 hour, from 35°C to 60°C over 6 hours, from 60°C to 80°C over 2 hours and then from 80°C to 100°C over 1 hour. The mixture was held at 100°C for 2 hours to conduct cast polymerization, thereby producing a transparent plastic luminescent material (light-amplifying material) in the form of a rod 1 cm in diameter and 5 cm in length, which was composed of a crosslinked acrylic copolymer containing a trivalent neodymium ion.

With respect to the rod-like luminescent material thus obtained, the light-emitting characteristics were determined by means of such an apparatus as illustrated in FIG. 1. In this example, "Al-Ga-As Semiconductor Laser" was used as the semiconductor laser (2).

After both end surfaces of the rod-like luminescent material (T) were mirror-polished, and the thus-treated luminescent material (T) was interposed between the resonators (3, 3), excitation light (wavelength: about 800 nm) from the semiconductor laser (2) of 0.5 W was caused to be absorbed in the luminescent material (T) to determine the light-emitting characteristics (wavelength) from the luminescent material (T) by means of the light spectrum analyzer (4). As a result, it was confirmed that the luminescent material emits light having a wavelength in the vicinity of 1060 nm.

〈Example 3〉

Monomer (M1) in an amount of 31.25 parts and Monomer (M2) in an amount of 18.75 parts were thoroughly mixed with 20 parts of N,N-dimethylacrylamide (hereinafter referred to as "DMAA") and 30 parts of MMA, thereby preparing a monomer mixture. The contents of the phosphate group and the amide group in the monomer mixture are 17.7% for the phosphate group and 8.5% for the amide group, both based on the polymerizable component, and the total content thereof is 26.2%. The proportion of the amide group to the phosphate group is 32.4:67.6 in terms of a mass ratio of the amide group to the phosphate group.

To this monomer mixture were added 46 parts of neodymium acetate monohydrate (containing a trivalent neodymium ion in a proportion of 19.5 parts per 100 parts of the polymerizable component), and the resultant mixture was thoroughly stirred and mixed, thereby preparing a monomer composition.

To the thus-prepared monomer composition were added 2.0 parts of t-butyl peroxyneodecanoate. The resultant mixture was heated at 35°C for 1 hour, from 35°C to 60°C over 6 hours, from 60°C to 80°C over 2 hours and then from 80°C to 100°C over 1 hour. The mixture was held at 100°C for 2 hours to conduct cast polymerization, thereby producing a transparent plastic luminescent material (light-amplifying material) in the form of a rod 1 cm in diameter and 5 cm in length, which was composed of a crosslinked acrylic copolymer containing a trivalent neodymium ion.

With respect to the rod-like luminescent material thus obtained, the light-emitting characteristics were determined by means of such an apparatus as illustrated in FIG. 1. In this example, "Al-Ga-As Semiconductor Laser" was used as the semiconductor laser (2).

After both end surfaces of the rod-like luminescent material (T) were mirror-polished, and the thus-treated luminescent material (T) was interposed between the resonators (3, 3), excitation light (wavelength: about 800 nm) from the semiconductor laser (2) of 0.5 W was caused to be absorbed in the luminescent material (T) to determine the light-emitting characteristics (wavelength) from the luminescent material (T) by means of the light spectrum analyzer (4). As a result, it was confirmed that the luminescent material emits light having a wavelength in the vicinity of 1060 nm.

The water absorptivity of the luminescent material was determined in the following manner and was found to be 3.5%.

[Determination method of the water absorptivity]

After the mass $W_0$ of a test piece was measured, and the test piece was immersed at 23°C for 20 hours in water, the water attached to the surface of the specimen was wiped out, and the mass $W_1$ (g) of the thus-treated test piece was then measured, whereby the water absorptivity of the test piece was calculated out in accordance with the following numerical expression:

Numerical expression:

$$\text{Water absorptivity (\%)} = \{(W_1 - W_0)/W_0\} \times 100$$

〈Example 4〉

Monomer (M1) in an amount of 31.25 parts and Monomer (M2) in an amount of 18.75 parts were thoroughly mixed with 30 parts of DMAA, 10 parts of MMA and 10 parts of n-butyl acrylate (hereinafter referred to as "n-BAA"), thereby preparing a monomer mixture. The contents of the phosphate group and the amide group in the monomer mixture are 17.7% for the phosphate group and 12.7% for the amide group, both based on the polymerizable component, and the total content thereof is 30.4%. The proportion of the amide group to the phosphate group is 41.8:58.2 in terms of a mass ratio of the amide group to the phosphate group.

To this monomer mixture were added 10 parts of praseodymium acetate dihydrate (containing a trivalent praseodymium ion in a proportion of 4.0 parts per 100 parts of the polymerizable component), and the resultant mixture was thoroughly stirred and mixed, thereby preparing a monomer composition.

To the thus-prepared monomer composition were added 2.0 parts of t-butyl peroxyneodecanoate. The resultant mixture was heated at 35°C for 1 hour, from 35°C to 60°C over 6 hours, from 60°C to 80°C over 2 hours and then from 80°C to 100°C over 1 hour. The mixture was held at 100°C for 2 hours to conduct cast polymerization, thereby producing a transparent plastic luminescent material (light-amplifying material) in the form of a rod 1 cm in diameter and 5 cm in length, which was composed of a crosslinked acrylic copolymer containing a trivalent praseodymium ion.

With respect to the rod-like luminescent material thus obtained, the light-emitting characteristics were determined by means of such an apparatus as illustrated in FIG. 1. In this example, "In-Ga-As Semiconductor Laser" was used as the semiconductor laser (2).

After both end surfaces of the rod-like luminescent material (T) were mirror-polished, and the thus-treated luminescent material (T) was interposed between the resonators (3, 3), excitation light (wavelength: about 1020 nm) from the semiconductor laser (2) of 0.5 W was caused to be absorbed in the luminescent material (T) to determine the light-emitting characteristics (wavelength) from the luminescent material (T) by means of the light spectrum analyzer (4). As a result, it was confirmed that the luminescent material emits light having a wavelength in the vicinity of 1300 nm.

The water absorptivity of the luminescent material was determined in the same manner as in Example 1 and was found to be 3.5%.

〈Example 5〉

Monomer (M1) in an amount of 31.25 parts and Monomer (M2) in an amount of 18.75 parts were thoroughly mixed with 30 parts of DMAA, 10 parts of MMA and 10 parts of n-BAA, thereby preparing a monomer mixture. The contents of the phosphate group and the amide group in the monomer mixture are 17.7% for the phosphate group and 12.7% for the amide group, both based on the polymerizable component, and the total content thereof is 30.4%. The proportion of the amide group to the phosphate group is 41.8:58.2 in terms of a mass ratio of the amide group to the phosphate group.

To this monomer mixture were added 1 part of erbium acetate tetrahydrate (containing a trivalent erbium ion in a proportion of 0.4 parts per 100 parts of the polymerizable component), and the resultant mixture was thoroughly stirred and mixed, thereby preparing a monomer composition.

To the thus-prepared monomer composition were added 2.0 parts of t-butyl peroxyneodecanoate. The resultant mixture was heated at 35°C for 1 hour, from 35°C to 60°C over 6 hours, from 60°C to 80°C over 2 hours and then from 80°C to 100°C over 1 hour. The mixture was held at 100°C for 2 hours to conduct cast polymerization, thereby producing a transparent plastic luminescent material (light-amplifying material) in the form of a rod 1 cm in diameter and 5 cm in length, which was composed of a crosslinked acrylic copolymer containing a trivalent erbium ion.

With respect to the rod-like luminescent material thus obtained, the light-emitting characteristics were determined by means of such an apparatus as illustrated in FIG. 1. In this example, "Ga-In-As-P Semiconductor Laser" was used as the semiconductor laser (2).

After both end surfaces of the rod-like luminescent material (T) were mirror-polished, and the thus-treated luminescent material (T) was interposed between the resonators (3, 3), excitation light (wavelength: about 1480 nm) from the semiconductor laser (2) of 0.5 W was caused to be absorbed in the luminescent material (T) to determine the light-emitting characteristics (wavelength) from the luminescent material (T) by means of the light spectrum analyzer (4). As a result, it was confirmed that the luminescent material emits light having a wavelength in the vicinity of 1540 nm.

The water absorptivity of the luminescent material was determined in the same manner as in Example 1 and was found to be 3.4%.

〈Example 6〉

Monomer (M1) in an amount of 4.44 parts and Monomer (M2) in an amount of 2.67 parts were thoroughly mixed with 6.82 parts of DMAA and 86.07 parts of MMA, thereby preparing a monomer mixture. The contents of the phosphate group and the amide group in the monomer mixture are 2.52% for the phosphate group and 2.89% for the amide group, both based on the polymerizable component, and the total content thereof is 5.41%. The proportion of the amide group to the phosphate group is 53.4:46.6 in terms of a mass ratio of the amide group to the phosphate group.

To this monomer mixture were added 2.65 parts of gadolinium acetate tetrahydrate (containing a trivalent gadolinium ion in a proportion of 1.03 parts per 100 parts of the polymerizable component), and the resultant mixture was thoroughly stirred and mixed, thereby preparing a monomer composition.

To the thus-prepared monomer composition were added 2.0 parts of t-butyl peroxyneodecanoate. The resultant mixture was heated at 35°C for 1 hour, from 35°C to 60°C over 6 hours, from 60°C to 80°C over 2 hours and then from 80°C to 100°C over 1 hour. The mixture was held at 100°C for 2 hours to conduct cast polymerization, thereby producing a transparent plastic luminescent material in the form of a rod 1 cm in diameter and 5 cm in length, which was composed of a crosslinked acrylic copolymer containing a trivalent gadolinium ion.

With respect to the rod-like luminescent material thus obtained, the light-emitting characteristics were determined by means of such an apparatus as illustrated in FIG. 2. In FIG. 2, reference numeral 6 indicates a xenon flash lamp having an emission wavelength distribution in a range of 240 to 2000 nm, and 7 a light spectrum analyzer, and reference character T designates a rod-like luminescent material, and L light emission from the luminescent material T.

Both end surfaces of the rod-like luminescent material (T) were mirror-polished, the xenon flash lamps (6, 6) were arranged around the thus-treated luminescent material (T), and excitation light from the xenon flash lamps (6, 6) was caused to be absorbed in the luminescent material (T) to determine the light-emitting characteristics (wavelength) from the luminescent material (T) by means of the light spectrum analyzer (7). As a result, it was confirmed that the luminescent material emits light having a wavelength in the vicinity of 346 nm.

〈Example 7〉

Monomer (M1) in an amount of 4.30 parts and Monomer (M2) in an amount of 2.58 parts were thoroughly mixed with 6.60 parts of DMAA and 86.52 parts of MMA, thereby preparing a monomer mixture. The contents of the phosphate group and the amide group in the monomer mixture are 2.44% for the phosphate group and 2.79% for the amide group, both based on the polymerizable component, and the total content thereof is 5.23%. The proportion of the

amide group to the phosphate group is 53.3:46.7 in terms of a mass ratio of the amide group to the phosphate group.

To this monomer mixture were added 2.60 parts of dysprosium acetate tetrahydrate (containing a trivalent dysprosium ion in a proportion of 1.03 parts per 100 parts of the polymerizable component), and the resultant mixture was thoroughly stirred and mixed, thereby preparing a monomer composition.

To the thus-prepared monomer composition were added 2.0 parts of t-butyl peroxyneodecanoate. The resultant mixture was heated at 35°C for 1 hour, from 35°C to 60°C over 6 hours, from 60°C to 80°C over 2 hours and then from 80°C to 100°C over 1 hour. The mixture was held at 100°C for 2 hours to conduct cast polymerization, thereby producing a transparent plastic luminescent material in the form of a rod 1 cm in diameter and 5 cm in length, which was composed of a crosslinked acrylic copolymer containing a trivalent dysprosium ion.

With respect to the rod-like luminescent material thus obtained, the light-emitting characteristics were determined by means of such an apparatus as illustrated in FIG. 2.

Both end surfaces of the rod-like luminescent material (T) were mirror-polished, the xenon flash lamps (6, 6) were arranged around the thus-treated luminescent material (T), and excitation light from the xenon flash lamps (6, 6) was caused to be absorbed in the luminescent material (T) to determine the light-emitting characteristics (wavelength) from the luminescent material (T) by means of the light spectrum analyzer (7). As a result, it was confirmed that the luminescent material emits light having a wavelength in the vicinity of 485 nm and light having a wavelength in the vicinity of 575 nm.

〈Example 8〉

Monomer (M1) in an amount of 4.13 parts and Monomer (M2) in an amount of 2.47 parts were thoroughly mixed with 6.35 parts of DMAA and 87.05 parts of MMA, thereby preparing a monomer mixture. The contents of the phosphate group and the amide group in the monomer mixture are 2.34% for the phosphate group and 2.69% for the amide group, both based on the polymerizable component, and the total content thereof is 5.03%. The proportion of the amide group to the phosphate group is 53.5:46.5 in terms of a mass ratio of the amide group to the phosphate group.

To this monomer mixture were added 2.54 parts of thulium acetate tetrahydrate (containing a trivalent thulium ion in a proportion of 1.02 parts per 100 parts of the polymerizable component), and the resultant mixture was thoroughly stirred and mixed, thereby preparing a monomer composition.

To the thus-prepared monomer composition were added 2.0 parts of t-butyl peroxyneodecanoate. The resultant mixture was heated at 35°C for 1 hour, from 35°C to 60°C over 6 hours, from 60°C to 80°C over 2 hours and then from 80°C to 100°C over 1 hour. The mixture was held at 100°C for 2 hours to conduct cast polymerization, thereby producing a transparent plastic luminescent material in the form of a rod 1 cm in diameter and 5 cm in length, which was composed of a crosslinked acrylic copolymer containing a trivalent thulium ion.

With respect to the rod-like luminescent material thus obtained, the light-emitting characteristics were determined by means of such an apparatus as illustrated in FIG. 2.

Both end surfaces of the rod-like luminescent material (T) were mirror-polished, the xenon flash lamps (6, 6) were arranged around the thus-treated luminescent material (T), and excitation light from the xenon flash lamps (6, 6) was caused to be absorbed in the luminescent material (T) to determine the light-emitting characteristics (wavelength) from the luminescent material (T) by means of the light spectrum analyzer (7). As a result, it was confirmed that the luminescent material emits light having a wavelength in the vicinity of 450 nm.

〈Example 9〉

Monomer (M1) in an amount of 30.44 parts and Monomer (M2) in an amount of 18.26 parts were thoroughly mixed with 15.57 parts of DMAA and 35.73 parts of MMA, thereby preparing a monomer mixture. The contents of the phosphate group and the amide group in the monomer mixture are 17.2% for the phosphate group and 6.59% for the amide group, both based on the polymerizable component, and the total content thereof is 23.79%. The proportion of the amide group to the phosphate group is 27.7:72.3 in terms of a mass ratio of the amide group to the phosphate group.

To this monomer mixture were added 35.87 parts of europium acetate tetrahydrate (containing a trivalent europium ion in a proportion of 13.59 per 100 parts of the polymerizable component), and the resultant mixture was thoroughly stirred and mixed, thereby preparing a monomer composition.

To the thus-prepared monomer composition were added 0.5 parts of t-butyl peroxyneodecanoate and 0.5 parts of an $\alpha$-methylstyrene dimer. The resultant mixture was heated at 50°C for 8 hours, from 50°C to 70°C over 6 hours and then from 70°C to 90°C over 4 hours. The mixture was held at 90°C for 2 hours to conduct cast polymerization, thereby producing a transparent plastic luminescent material in the form of a quadratic prism having a rectangular section of 1 cm x 1 cm and a length of 5 cm, which was composed of a crosslinked acrylic copolymer containing a trivalent europium ion.

With respect to the quadratic prism-like luminescent material thus obtained, the light-emitting characteristics were determined. As a result, it was confirmed that the luminescent material absorbs excitation light having a wavelength of 396 nm and emits light having a wavelength of 596 nm and light having a wavelength of 616 nm.

〈Example 10〉

A monomer composition was prepared in the same manner as in Example 9. To 50.0 parts of the monomer composition were added 50.0 parts of MMA to mix them, thereby diluting the monomer composition in such a manner that the content of the trivalent europium ion amounts to 6.8 parts per 100 parts of the polymerizable component.

The thus-obtained monomer composition in which the content of the europium ion had been diluted to 1/2 was used to conduct cast polymerization in the same manner as in Example 9, thereby producing a transparent plastic luminescent material in the form of a quadratic prism having a rectangular section of 1 cm x 1 cm and a length of 5 cm, which was composed of a crosslinked acrylic copolymer containing a trivalent europium ion.

With respect to the quadratic prism-like luminescent material thus obtained, the light-emitting characteristics were determined. As a result, it was confirmed that the luminescent material absorbs excitation light having a wavelength of 396 nm and emits light having a wavelength of 596 nm and light having a wavelength of 616 nm.

〈Example 11〉

A monomer composition was prepared in the same manner as in Example 9. To 25.0 parts of the monomer composition were added 75.0 parts of MMA to mix them, thereby diluting the monomer composition in such a manner that the content of the trivalent europium ion amounts to 3.4 parts per 100 parts of the polymerizable component.

The thus-obtained monomer composition in which the content of the europium ion had been diluted to 1/4 was used to conduct cast polymerization in the same manner as in Example 9, thereby producing a transparent plastic luminescent material in the form of a quadratic prism having a rectangular section of 1 cm x 1 cm and a length of 5 cm, which was composed of a crosslinked acrylic copolymer containing a trivalent europium ion.

With respect to the quadratic prism-like luminescent material thus obtained, the light-emitting characteristics were determined. As a result, it was confirmed that the luminescent material absorbs excitation light having a wavelength of 396 nm and emits light having a wavelength of 596 nm and light having a wavelength of 616 nm.

〈Concentration of europium ion and emission intensity〉

With respect to each of the luminescent material ($Eu^{3+}$ content: 13.59) according to Example 9, the luminescent material ($Eu^{3+}$ content: 6.8 parts) according to Example 10 and the luminescent material ($Eu^{3+}$ content: 3.4 parts) according to Example 11, the emission intensity at a wavelength of 616 nm was determined. As a result, it was found that assuming that the emission intensity of the luminescent material according to Example 9 is 1, the emission intensity of the luminescent material according to Example 10 is 0.7, and the emission intensity of the luminescent material according to Example 11 is 0.4. Therefore, no concentration quenching was observed.

〈Example 12〉

Monomer (M1) in an amount of 50 parts and Monomer (M2) in an amount of 30 parts were thoroughly mixed with 20 parts of MMA, thereby preparing a monomer mixture.

To this monomer mixture were added 1 part of erbium acetate tetrahydrate (containing a trivalent erbium ion in a proportion of 0.4 parts per 100 parts of the polymerizable component), and the resultant mixture was thoroughly stirred and mixed, thereby preparing a monomer composition.

To the thus-prepared monomer composition were added 2.0 parts of t-butyl peroxyneodecanoate. The resultant mixture was heated at 35°C for 1 hour, from 35°C to 60°C over 6 hours, from 60°C to 80°C over 2 hours and then from 80°C to 100°C over 1 hour. The mixture was held at 100°C for 2 hours to conduct cast polymerization, thereby producing a transparent plastic luminescent material (light-amplifying material) in the form of a rod 1 cm in diameter and 5 cm in length, which was composed of a crosslinked acrylic copolymer containing a trivalent erbium ion.

With respect to the rod-like luminescent material thus obtained, the light-emitting characteristics were determined by means of such an apparatus as illustrated in FIG. 1. In this example, "Ga-In-As-P Semiconductor Laser" was used as the semiconductor laser (2).

After both end surfaces of the rod-like luminescent material (T) were mirror-polished, and the thus-treated luminescent material (T) was interposed between the resonators (3, 3), excitation light (wavelength: about 1480 nm) from the semiconductor laser (2) of 0.5 W was caused to be absorbed in the luminescent material (T) to determine the light-emitting characteristics (wavelength) from the luminescent material (T) by means of the light spectrum analyzer

(4). As a result, it was confirmed that the luminescent material emits light having a wavelength in the vicinity of 1550 nm.

The water absorptivity of the luminescent material was determined in the same manner as in Example 1 and was found to be as high as 6.8%. After the determination of the water absorptivity, the luminescent material became opacified.

〈Example 13〉

Monomer (M1) in an amount of 7.67 parts and Monomer (M2) in an amount of 4.60 parts were thoroughly mixed with 87.72 parts of MMA, thereby preparing a monomer mixture.

To this monomer mixture were added 2.72 parts of europium acetate tetrahydrate (containing a trivalent europium ion in a proportion of 1.03 per 100 parts of the polymerizable component), and the resultant mixture was thoroughly stirred and mixed, thereby preparing a monomer composition.

To the thus-prepared monomer composition were added 2.0 parts of t-butyl peroxyneodecanoate. The resultant mixture was heated at 35°C for 1 hour, from 35°C to 60°C over 6 hours, from 60°C to 80°C over 2 hours and then from 80°C to 100°C over 1 hour. The mixture was held at 100°C for 2 hours to conduct cast polymerization, thereby producing a transparent plastic luminescent material in the form of a quadratic prism having a rectangular section of 1 cm x 1 cm and a length of 5 cm, which was composed of a crosslinked acrylic copolymer containing a trivalent europium ion.

With respect to the quadratic prism-like luminescent material thus obtained, the light-emitting characteristics were determined. As a result, it was confirmed that the luminescent material absorbs excitation light having a wavelength of 396 nm and emits light having a wavelength of 596 nm and light having a wavelength of 616 nm.

EFFECTS OF THE INVENTION

As described above, the luminescent materials according to the present invention have high light-amplifying ability and are easy to form or mold because the phosphate group and the rare earth metal ion are contained in the resin.

In the luminescent materials according to the present invention, which contain the amide group together with the phosphate group, the rare earth metal ion can be contained in a state uniformly dispersed in a high proportion in the resin. Such a luminescent material has high light-amplifying ability and is easy to form or mold and low in water absorption property.

According to the production process of the present invention, the above-described luminescent materials can be produced directly and surely.

## Claims

1. A plastic luminescent material comprising a resin containing a phosphate group and a rare earth metal ion therein.

2. The plastic luminescent material according to Claim 1, wherein the phosphate group exists in the form chemically bonded to the structure of a polymer constituting the resin.

3. The plastic luminescent material according to Claim 1, wherein the resin is an acrylic resin.

4. The plastic luminescent material according to Claim 1, wherein the polymer constituting the resin is a copolymer obtained by copolymerizing a phosphate group-containing monomer represented by the following formula (1) and a monomer copolymerizable therewith:

$$PO(OH)_nR_{3-n} \qquad \text{Formula (1)}$$

wherein R means a polymerizable functional group represented by the following formula (2), and n is 1 or 2:

$$CH_2{=}CXCOO(C_pH_{2p}O)_m- \qquad \text{Formula (2)}$$

wherein X denotes a hydrogen atom or a methyl group, p is an integer of 2 to 6, and m is an integer of 0 to 5.

5. The plastic luminescent material according to Claim 1, wherein the rare earth metal ion is at least one selected from the group consisting of a trivalent neodymium ion, a trivalent praseodymium ion, a trivalent erbium ion and a trivalent europium ion.

6. The plastic luminescent material according to claim 1, wherein the amide group is contained.

7. The plastic luminescent material according to Claim 1, wherein the amide group is contained by dispersing at least one compound selected from the group consisting of an amide group-containing compound represented by the following formula (3), an amide group-containing compound represented by the following formula (4) and an amide group-containing compound represented by the following formula (5) in the resin:

Formula (3) 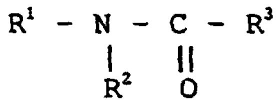

wherein $R^1$ and $R^2$ independently mean a hydrogen atom, an alkyl group having 1 to 4 carbon atoms or a phenyl group and may be the same or different from each other, and $R^3$ denotes a hydrogen atom, an alkyl group having 1 to 4 carbon atoms or an alkenyl group having 2 or 3 carbon atoms;

Formula (4) 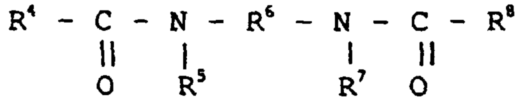

wherein $R^4$ and $R^8$ independently mean a hydrogen atom, an alkyl group having 1 to 4 carbon atoms or an alkenyl group having 2 or 3 carbon atoms and may be the same or different from each other, $R^5$ and $R^7$ independently denote a hydrogen atom, an alkyl group having 1 to 4 carbon atoms or a phenyl group and may be the same or different from each other, and $R^6$ represents an alkylene group having 1 to 6 carbon atoms; and

Formula (5)

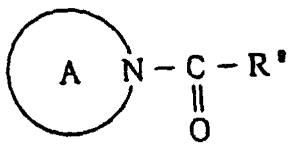

,

wherein a ring A means a 4-, 5- or 6-membered ring or a heterocycle thereof, and $R^9$ denotes a hydrogen atom, an alkyl group having 1 to 4 carbon atoms or an alkenyl group having 2 or 3 carbon atoms.

8. The plastic luminescent material according to Claim 1, wherein the amide group exists in the form chemically bonded to the structure of the polymer constituting the resin.

9. The plastic luminescent material according to Claim 1, wherein the polymer constituting the resin is a copolymer obtained by copolymerizing a monomer mixture containing the phosphate group-containing monomer and a polymerizable amide group-containing compound.

10. The plastic luminescent material according to Claim 1, wherein the total content of the amide group and the phosphate group in the resin is 0.01 to 50 mass%, a proportion of the amide group to the phosphate group is 10:90 to 70:30 in terms of a mass ratio, and the content of the rare earth metal ion is 0.005 to 30 parts by mass per 100 parts by mass of the resin.

11. A plastic optical material comprising a resin containing a phosphate group and a rare earth metal ion therein.

12. A process for producing a plastic luminescent material, which comprises the step of subjecting 100 parts by mass of the following monomer mixture (I) to a polymerization treatment in the presence of 0.005 to 80 parts by mass of a rare earth metal compound:

[Monomer mixture (I)]

A monomer mixture comprising:

a phosphate group-containing monomer represented by the following formula (1), and
at least one compound selected from the group consisting of an amide group-containing compound represented by the following formula (3), an amide group-containing compound represented by the following formula (4) and an amide group-containing compound represented by the following formula (5),
wherein the total content of the phosphate group in the phosphate group-containing monomer and the amide group in the amide group-containing compound is 0.01 to 50 mass% based on the whole polymerizable component, and a proportion of the amide group to the phosphate group is 10:90 to 70:30 in terms of a mass ratio:

$$PO(OH)_nR_{3-n} \qquad \text{Formula (1)}$$

wherein R means a polymerizable functional group represented by the following formula (2), and n is 1 or 2:

$$CH_2{=}CXCOO(C_pH_{2p}O)_m\text{-} \qquad \text{Formula (2)}$$

wherein X denotes a hydrogen atom or a methyl group, p is an integer of 2 to 6, and m is an integer of 0 to 5;

Formula (3) 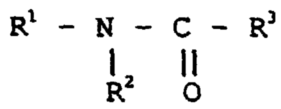

wherein $R^1$ and $R^2$ independently mean a hydrogen atom, an alkyl group having 1 to 4 carbon atoms or a phenyl group and may be the same or different from each other, and $R^3$ denotes a hydrogen atom, an alkyl group having 1 to 4 carbon atoms or an alkenyl group having 2 or 3 carbon atoms;

Formula (4) 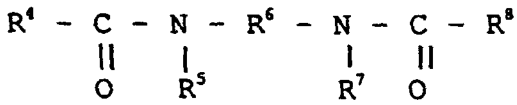

wherein $R^4$ and $R^3$ independently mean a hydrogen atom, an alkyl group having 1 to 4 carbon atoms or an alkenyl group having 2 or 3 carbon atoms and may be the same or different from each other, $R^5$ and $R^7$ independently denote a hydrogen atom, an alkyl group having 1 to 4 carbon atoms or a phenyl group and may be the same or different from each other, and $R^6$ represents an alkylene group having 1 to 6 carbon atoms; and

Formula (5)

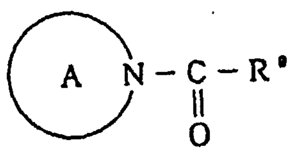

wherein a ring A means a 4-, 5- or 6-membered ring or a heterocycle thereof, and $R^9$ denotes a hydrogen atom, an alkyl group having 1 to 4 carbon atoms or an alkenyl group having 2 or 3 carbon atoms.

**13.** The process according to Claim 10 for producing a plastic luminescent material, wherein a polymerizable amide group-containing compound, in which $R^3$ in the formula (3) is an alkenyl group having 2 or 3 carbon atoms, is used.

**14.** The process according to Claim 10 for producing a plastic luminescent material, wherein a polymerizable amide group-containing compound, in which $R^4$ or $R^8$ in the formula (4) is an alkenyl group having 2 or 3 carbon atoms, is used.

**15.** The process according to Claim 10 for producing a plastic luminescent material, wherein a polymerizable amide group-containing compound, in which $R^9$ in the formula (5) is an alkenyl group having 2 or 3 carbon atoms, is used.

Fig. 1

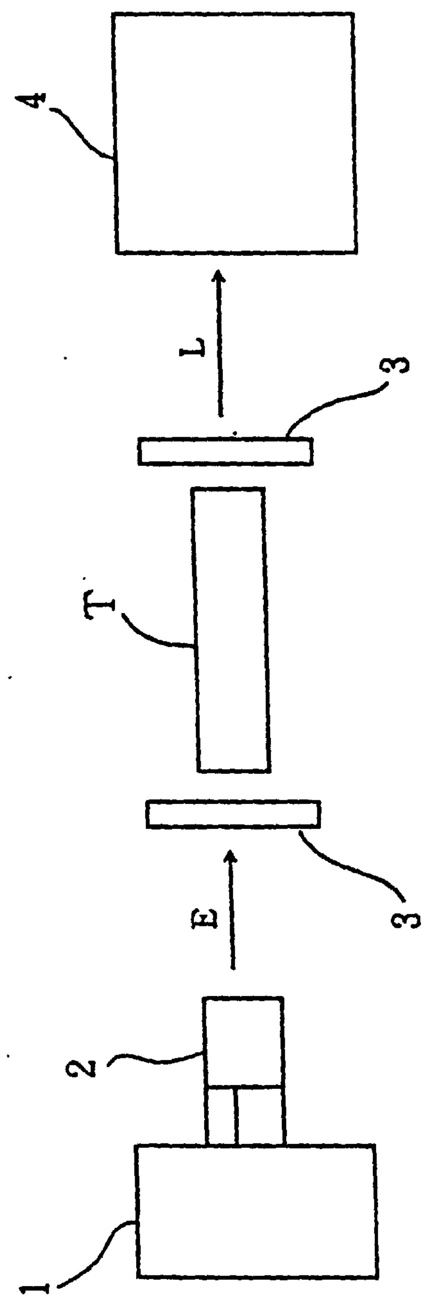

Fig. 2

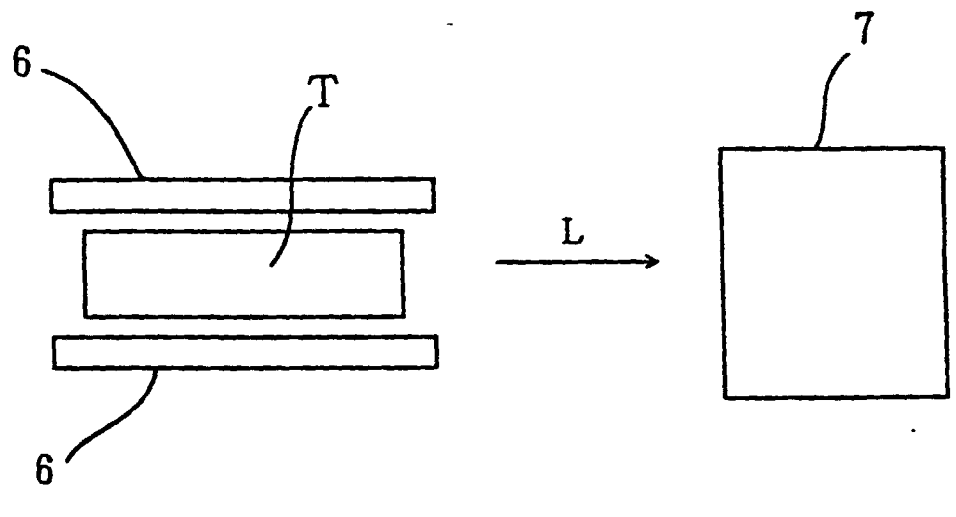

## INTERNATIONAL SEARCH REPORT

International application No.
PCT/JP98/02251

A. CLASSIFICATION OF SUBJECT MATTER
Int.Cl$^6$ C09K11/06

According to International Patent Classification (IPC) or to both national classification and IPC

B. FIELDS SEARCHED

Minimum documentation searched (classification system followed by classification symbols)
Int.Cl$^6$ C09K11/06, C08L43/02, C08F30/02

Documentation searched other than minimum documentation to the extent that such documents are included in the fields searched

Electronic data base consulted during the international search (name of data base and, where practicable, search terms used)
CA (STN)

C. DOCUMENTS CONSIDERED TO BE RELEVANT

| Category* | Citation of document, with indication, where appropriate, of the relevant passages | Relevant to claim No. |
|---|---|---|
| PX | JP, 9-188796, A (Kureha Chemical Industry Co., Ltd.), 22 July, 1997 (22. 07. 97), Reference as a whole & EP, 783115, A2 & US, 5759448, A | 11 |
| A | JP, 63-54465, A (Asahi Chemical Industry Co., Ltd.), 8 March, 1988 (08. 03. 88), Claims ; page 2, upper right column, line 20 to lower right column, line 4 (Family: none) | 1-15 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 August, 1998 (18. 08. 98) | 25 August, 1998 (25. 08. 98) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP98/02251

C (Continuation). DOCUMENTS CONSIDERED TO BE RELEVANT

| Category* | Citation of document, with indication, where appropriate, of the relevant passages | Relevant to claim No. |
|---|---|---|
| A | JP, 61-500264, A (Institut Obshchei i Neoorganicheskoi Khimi imeni N.S. Kurnakova Akademii Nauk SSR),<br>20 February, 1986 (20. 02. 86)<br>& WO, 85/1945, A & AU, 8322660, A<br>& SE, 8503138, A & NL, 8320368, A<br>& FR, 2565457, A & FI, 8502579, A<br>& CS, 8403122, A & CH, 667463, A<br>& DE, 3390545, C & GB, 2158833, A<br>& IT, 1196110, B | 1-15 |
| A | JP, 7-206881, A (Research Development Corp of Japan),<br>8 August, 1995 (08. 08. 95),<br>Reference as a whole (Family: none) | 1, 11 |

Form PCT/ISA/210 (continuation of second sheet) (July 1992)